# EUROPEAN PATENT APPLICATION

(11) **EP 1 820 774 A2**
(43) Date of publication of application: **22.08.2007**
(21) Application number: 07250575.3
(22) Date of filing: 13.02.2007
(51) Int. Cl.: C01B 3/06, C01B 6/21

(54) **Borohydride fuel formulation**

(30) Priority: 16.02.2006 US 774253 P
(71) Applicant: Rohm and Haas Company, Philadelphia, PA 19106-2399 (US)
(72) Inventor: Yamamoto, John Hiroshi, Andover, Massachusetts 01810 (US)
(74) Representative: Kent, Venetia Katherine

(57) **Abstract**

A solid composition containing at least one borohydride compound and at least one base.

## Description

This invention relates to a solid borohydride-containing formulation useful for hydrogen generation in fuel cells.

Borohydride-containing compositions are known as hydrogen sources for hydrogen fuel cells, usually in the form of aqueous solutions. Solid borohydride-containing compositions also have been used. For example, U.S. Pub. No. 2005/0238573 discloses the use of solid sodium borohydride, which is combined with aqueous acid to produce hydrogen. However, the problem of rapid dissolution of borohydride is not addressed by this reference.

The problem addressed by this invention is to find a solid formulation of borohydride that dissolves at least as quickly as pure borohydride salts.

### STATEMENT OF INVENTION

The present invention provides a solid composition comprising: (a) from 50% to 98% of at least one borohydride compound; and (b) from 2% to 50% of at least one base.

### DETAILED DESCRIPTION

Percentages are weight percentages and temperatures are in °C, unless specified otherwise. A "base" is a compound with a pKₐ>8 which is solid at 40°C. A "borohydride compound" is a compound containing the borohydride anion, BH₄.

In one embodiment, the amount of borohydride compound(s) is at least 75%, alternatively at least 83%, alternatively at least 85%, alternatively at least 86%, alternatively at least 87%; the amount of base(s) is no more than 25%, alternatively no more than 17%, alternatively no more than 15%, alternatively no more than 14%, alternatively no more than 13%. In one embodiment of the invention, the amount of base is at least 2.5%, alternatively at least 3%, alternatively at least 5%; the amount of borohydride compound is no more than 97.5%, alternatively no more than 97%, alternatively no more than 95%. Preferably, the borohydride compound is a metal salt which has a metal cation from groups 1, 2, 4, 5, 7, 11, 12 or 13 of the periodic table, or a mixture thereof. In one embodiment, the borohydride compound is an alkali metal borohydride or combination thereof, alternatively it comprises sodium borohydride (SBH) or potassium borohydride or a mixture thereof, alternatively sodium borohydride. Preferably, the base is an alkali metal hydroxide or combination thereof, alkali metal alkoxide or alkaline earth alkoxide or combination thereof, alternatively it is an alkali metal hydroxide or sodium or potassium methoxide, or mixture thereof, alternatively sodium, lithium or potassium hydroxide or sodium or potassium methoxide, or a mixture thereof, alternatively sodium hydroxide or potassium hydroxide; alternatively sodium hydroxide. More than one alkali metal borohydride and more than one base may be present.

The present invention is also directed to a method for rapid production of an aqueous borohydride solution. Adding to water a sufficient amount of the borohydride/base composition described above to form a 1% to 40% solids solution produces a maximum dissolution rate. In one embodiment of the invention, the solution has at least 5% solids, alternatively at least 10%; the solution has no more than 35% solids, alternatively no more than 30%. The water may contain small amounts of additives, e.g., anti-foaming agents, surfactants, etc.

The present invention is further directed to a method for improving flow of powdered metal borohydride salts, and to a solid composition having improved flow. Addition of at least 2.5% of at least one base to at least one metal borohydride prevents clumping and caking of the solid. In one embodiment of the invention, at least 3% of a base is added, alternatively at least 5%. In one embodiment of the invention, no more than 40% of a base is added, alternatively no more than 20%, alternatively no more than 17%, alternatively no more than 15%, alternatively no more than 14%, alternatively no more than 13.5%. Preferably, the metal borohydride compound is an alkali metal borohydride; alternatively it comprises sodium borohydride or potassium borohydride, alternatively sodium borohydride. Preferably, the base is an alkali metal hydroxide or sodium or potassium methoxide, or mixture thereof; alternatively lithium, sodium or potassium hydroxide or sodium or potassium methoxide, or a mixture thereof; alternatively sodium hydroxide or potassium hydroxide; alternatively sodium hydroxide. More than one alkali metal borohydride and more than one base may be present.

The solid composition of this invention may be in any convenient form. Examples of suitable solid forms include powder, granules, and compressed solid material. Preferably, powders have an average particle size less than 80 mesh (177 µm). Preferably, granules have an average particle size from 10 mesh (2000 µm) to 40 mesh (425 µm). Compressed solid material may have a size and shape determined by the equipment comprising the hydrogen generation system. In one embodiment of the invention, compressed solid material is in the form of a typical caplet used in other fields. The compaction pressure used to form compressed solid material is not critical.

In one embodiment of the invention, the solid composition is substantially free of substances that catalyze hydrolysis of borohydride, e.g., salts of transition metals such as Co, Ru, Ni, Fe, Rh, Pd, Os, Ir, Pt, or mixtures thereof; and borides of Co and/or Ni.

Preferably, the water content of the solid composition is no more than 0.5%, alternatively no more than 0.2%, alternatively no more than 0.1%. Preferably, the solid composition contains less than 20% of anything other than the borohydride compound and the base, alternatively less than 15%, alternatively less than 10%, alternatively less than 5%. Other possible constituents of the solid composition include, e.g., catalysts, acids, anti-foam agents and surfactants.

The solid composition of this invention also may be used in the fields of synthesis and metal recovery.

### EXAMPLES

### Example 1: Effect of NaOH on SBH Dissolution Rate

SBH powders were formulated with different NaOH contents. The preweighed solid mixtures were blended by mixing in a coffee grinder for about two minutes, and the resulting powder sieved through an 80 mesh (177 µm) sieve. The sieved powders were placed in water to make 10 mL of a 30% solution (% based on SBH+NaOH) and allowed to dissolve with slow stirring with a magnetic stir bar. Average complete dissolution times for 2 runs are displayed in Table 1 below.

**Table 1**

| Dissolution time (sec) | % NaOH |
|---|---|
| 26 | 0 |
| 26 | 1 |
| 18 | 2 |
| 16 | 3 |
| 14 | 5 |
| 12 | 10 |
| 10 | 13 |
| 10 | 15 |
| 10 | 20 |
| 10 | 25 |
| 10 | 50 |

When the data are normalized to 100% SBH content, the following profile of corrected times (Corr. diss. time) is obtained, shown below in Table 2.

**Table 2**

| Corr. diss. time (sec) | % NaOH |
|---|---|
| 26 | 0 |
| 26.3 | 1 |
| 18 | 2 |
| 16 | 3 |
| 14 | 5 |
| 13 | 10 |
| 11 | 13 |
| 11.7 | 15 |
| 12.5 | 20 |
| 13 | 25 |
| 20 | 50 |

These results show that the dissolution time per gram of SBH begins to decrease at 2% NaOH and then begins to increase again at about 15-20% NaOH, with a marked increase beyond 25% NaOH.

### Example 2: Dissolution Time for Caplets

Caplets were formed under a pressure of 10,000 psi (68.9 kPa), and dissolved as described in Example 1. Results are presented below in Tables 3 and 4.

**Table 3**

| Composition | Dissolution time (sec) (data for two runs) |
|---|---|
| 0 % NaOH | 699, 659 |
| 2% NaOH | 579, 545 |
| 5 % NaOH | 450, 510 |
| 10 % NaOH | 405, 408 |
| 13 % NaOH | 339, 354 |
| 15% NaOH | 299, 324 |
| 25 % NaOH | 290, 269 |

**Table 4: Data Normalized to 100% SBH**

| Composition | Corr. dissol. time (sec) (data for two runs) |
|---|---|
| 0 % NaOH | 699, 659 |
| 2% NaOH | 590, 556 |
| 5 % NaOH | 473, 536 |
| 10 % NaOH | 458, 453 |
| 13 % NaOH | 389, 406 |
| 15% NaOH | 351, 381 |
| 25 % NaOH | 386, 358 |

### Example 3: Dissolution Rate of Caplets vs. Solution Size

Caplets of SBH, and of a formulation of 87% SBH/13% NaOH were dissolved as described in Example 1 to form solutions weighing 10g and 100g. The results are presented below in Table 5.

**Table 5**

| | Dissolution Times (sec) | |
|---|---|---|
| Wt. of Solution (g) | 87% SBH/13% NaOH | SBH |
| 10 | 177 | 249 |
| 100 | 303 | 576 |

The data demonstrate that when a larger amount of solution is prepared, the difference between SBH and the NaOH formulation increases. Therefore, the advantage of including NaOH in the formulation increases with solution size.

### Example 4: Dissolution Time vs. Weight % of Solids

Caplets, granule and powdered forms of SBH and of a formulation of 87% SBH/13% NaOH were dissolved as described in Example 1 to form solutions having different percentages of dissolved solids (Wt. %). The results are presented below in Table 6. Times are reported in seconds.

**Table 6**

| | 87% SBH/13% NaOH | | | SBH | | |
|---|---|---|---|---|---|---|
| Wt. % | caplets | granules | powder | caplets | granules | powder |
| 10 | 124 | 27.5 | 20.5 | 140 | 40 | 29.5 |
| 20 | 158 | 39.5 | 24 | 208 | 59.5 | 50 |
| 30 | 170 | | 40 | 249 | | 135 |

The dissolution times show that the difference in dissolution times between SBH and the NaOH formulation increases with the weight percent solids of the solution being prepared. Therefore, the advantage of adding NaOH to the formulation increases with the concentration of the solution being prepared.

### Example 5: Test of Flowability of Borohydride/Hydroxide Composition

Mixtures of SBH and NaOH were pulverized in a coffee grinder for 2 minutes and then placed into 100 mL polypropylene bottles. The samples were then left on a lab bench for 2 months, at which time each sample was lightly tapped and checked for its ability to flow. Results are reported below.

**Table 7**

| % NaOH | % SBH | Flow |
|---|---|---|
| 1 | 99 | Hard clumps |
| 2 | 98 | Hard clumps |
| 3 | 97 | Free flowing |
| 5 | 95 | Free flowing |
| 10 | 90 | Free flowing |
| 13 | 87 | Free flowing |
| 15 | 85 | Free flowing |
| 20 | 80 | Free flowing |
| 25 | 75 | Free flowing |
| 50 | 50 | Free flowing |

## Claims

1. A solid composition comprising:
(a) from 50% to 98% of at least one borohydride compound; and
(b) from 2% to 50% of at least one base.

2. The composition of claim 1 in which said at least one borohydride compound is sodium borohydride, potassium borohydride or a combination thereof, and said at least one base is sodium, lithium or potassium hydroxide, sodium or potassium methoxide, or a combination thereof.

3. The composition of claim 2 having at least 2.5% of said at least one base and no more than 97.5% sodium or potassium borohydride.

4. The composition of claim 3 in which the borohydride compound is sodium borohydride and the base is sodium hydroxide.

5. The composition of claim 4 having from 3% to 17% sodium hydroxide and from 83% to 97% sodium borohydride.

6. The composition of claim 5 having 15% sodium hydroxide and at least 85% sodium borohydride.

7. A method for rapid production of an aqueous borohydride solution comprising a step of adding the composition of claim 1 to water in an amount sufficient to produce a solution having from 1% to 40% solids.

8. The method of claim 7 in which the solution has from 5% to 35% solids.

9. A method for improving flow of powdered metal borohydride salts; said method comprising adding at least 2.5% of at least one base selected from alkali metal hydroxides, alkali metal alkoxides and alkaline earth alkoxides to at least one metal borohydride.

10. The method of claim 9 in which said at least one base is sodium hydroxide and said at least one metal borohydride is sodium borohydride.
